# EUROPÄISCHE PATENTSCHRIFT

(11) **EP 0 714 919 B1**
(45) Veröffentlichungstag und Bekanntmachung des Hinweises auf die Patenterteilung: **11.03.1998**
(21) Anmeldenummer: 95118323.5
(22) Anmeldetag: 22.11.1995
(51) Int. Cl.: C08F 8/00

(54) **Verfahren zur Herstellung von pulverförmigen Wasserstoffperoxid-Polymer-Komplexen**
Process for the manufacture of powdery complexes of polymers and hydrogen peroxide
Procédé de préparation de complexes pulvérulents de polymères et d'eau oxygénée

(30) Priorität: 02.12.1994 DE 4442900
(43) Veröffentlichungstag der Anmeldung: 05.06.1996
(73) Patentinhaber: BASF AKTIENGESELLSCHAFT, 67056 Ludwigshafen (DE)
(72) Erfinder: Breitenbach, Jörg, Dr., D-68199 Mannheim (DE); Sanner, Axel, Dr., D-67227 Frankenthal (DE)

(56) Entgegenhaltungen:
- WO-A-92/17158
- US-A- 3 480 557
- US-A- 5 190 749

## Beschreibung

Die vorliegende Erfindung betrifft ein Verfahren zur Herstellung freifließender pulverförmiger Wasserstoffperoxid-Komplexe auf Basis von Polymerisaten heterocyclischer N-Vinyl-Verbindungen.

Es ist allgemein bekannt, daß sich Wasserstoffperoxid bei längerer Lagerung zersetzt. Daher wurde eine Vielzahl von Stabilisatoren wie beispielsweise Polyvinylpyrrolidon eingesetzt, welche den Zersetzungsprozeß verhindern oder verlangsamen sollen.

In der US-A 3 376 110 und der US-A 3 480 557 wurden mit wasserunlöslichen Polymerisaten auf Basis von heterocyclischen N-Vinyl-Verbindungen stabilisierte Wasserstoffperoxid-Zusammensetzungen beschrieben, die durch Trocknen von wäßrigen Aufschlämmungen des Polymerisats und Wasserstoffperoxid beispielsweise in einem Trockenofen hergestellt werden. Nachteilig ist jedoch, daß bei vollständiger Trocknung gummiartige amorphe Zusammensetzungen entstehen.

Nach der US-A 5 008 093 lassen sich wasserfreie pulverförmige Wasserstoffperoxid-Polyvinylpyrrolidon-Komplexe herstellen, indem Wasserstoffperoxid zu einer Suspension des PVP in einem wasserfreien organischen Lösungsmittel gegeben und der sich bildende Komplex abfiltriert wird.

Die Herstellung von Wasserstoffperoxid-PVP-Komplexen in wasserfreiem organischen Lösungsmittel wird auch in der US-A 5 008 106 beschrieben.

Nachteilig an diesen Verfahren ist jedoch, daß zum einen wasserfreie Lösungsmittel benötigt werden, zum anderen mit hochkonzentrierten Wasserstoffperoxid-Lösungen gearbeitet werden muß. Außerdem kann nicht ausgeschlossen werden, daß die verwendeten organischen Lösungsmittel im Produkt verbleiben.

In der US-A 5 190 749 wird die Herstellung von pulverförmigen Komplexen aus Wasserstoffperoxid und PVP aus wäßrigen Lösungen in einem Wirbelbettprozeß mit nachgeschalteter Trocknung beschrieben. Für den Wirbelbettprozeß müssen Pulver bestimmter Korngrößenverteilungen eingesetzt werden. Die Wasserstoffperoxidzugabe muß genau dosiert werden, da sonst gummiartige, klebrige Produkte entstehen.

In der US-A 5 183 901 ist ein Verfahren zur Herstellung von freifließenden Pulvern aus Harnstoff, Wasserstoffperoxid und Polyvinylpyrrolidon beschrieben, wobei eine wäßrige Harnstoff/Wasserstoffperoxid-Lösung auf ein PVP-Wirbelbett gesprüht wird.

Aufgabe der vorliegenden Erfindung war es, ein vereinfachtes Verfahren zur Herstellung von Wasserstoffperoxid-Polymer-Komplexen zu finden.

Demgemäß wurde ein Verfahren zur Herstellung von pulverförmigen Komplexen aus Wasserstoffperoxid und Polymerisaten auf Basis von heterocyclischen N-Vinyl-Verbindungen gefunden, welches dadurch gekennzeichnet ist, daß man eine wäßrige oder wäßrig-alkoholische Lösung oder Suspension, enthaltend Wasserstoffperoxid und Polymerisate auf Basis von heterocyclischen N-Vinyl-Verbindungen, oder entsprechende Lösungen der einzelnen Komponenten zerstäubt und der Sprühtrocknung in einem Inertgasstrom unterwirft.

Als Polymerisate auf Basis von heterocyclischen N-Vinyl-Verbindungen eignen sich vor allem Homo- oder Copolymerisate von N-Vinylcaprolactam, N-Vinylpyrrolidon oder N-Vinylimidazol oder Gemische solcher Polymerisate. Als Comonomere kommen Vinylacetat, Isopropenylacetat, Vinyllaurat, Vinylbenzoat, Methylvinylether, 2-Methyl-vinyl-imidazol, N-Vinylpiperidon, N-Vinyl-2-oxa-zolidon, Methylacrylat, Ethylacrylat, Styrol oder kationisch modifizierte Vinylmonomere in Betracht. Geeignete Copolymerisate enthalten beispielsweise 30 bis 99 Gew.-% eines N-Vinyl-Monomeren und 1 bis 70 Gew.-% eines Comonomeren.

Bevorzugt wird als Polymerisat Polyvinylpyrrolidon eingesetzt. Die K-Werte geeigneter löslicher Polymere liegen im Bereich von 10 bis 100, bevorzugt 12 bis 30, besonders bevorzugt 30 bis 60. Die K-Werte werden nach H. Fikentscher, Cellulose-Chemie 13, S. 48 bis 64 und S. 71 bis 94 (1932) gemessen (1 % im H₂O oder Ethanol bei 22°C).

Die Herstellung der Polymerisate kann auf an sich bekannte Weise durch Lösungspolymerisation in Gegenwart von radikalbildenden Initiatoren erfolgen. Geeignete Lösungsmittel sind vor allem Wasser oder Alkohole wie Ethanol oder Isopropanol oder Alkohol/Wasser-Gemische. Als radikalbildende Initiatoren können die üblichen Starter wie 2,2'-Azo-bis-iso-butyronitril, 2,2'-Azo-bis(N,N'-dimethylenisobutyroamidin), Di-tert-butylperoxid, Dibenzoylperoxid, Wasserstoffperoxid, H₂O₂/Kupfer, H₂O₂/Fe(II) oder Persulfate verwendet werden. Die Polymerisation erfolgt üblicherweise bei Temperaturen von 30 bis 100°C. Die entstehenden Polymerisat-Lösungen weisen im allgemeinen Feststoffgehalte im Bereich von 3 bis 70, bevorzugt 30 bis 60 Gew.% auf.

Die Polymerisat-Lösungen können, so wie sie bei der Polymerisation anfallen, ohne weitere Behandlung für das erfindungsgemäße Verfahren eingesetzt werden.

Erfindungsgemäß können auch Suspensionen von vernetzten Homo- oder Copolymerisaten auf Basis von heterocyclischen N-Vinyl-Verbindungen eingesetzt werden.

Wasserstoffperoxid wird vorzugsweise in Form 3 bis 70, bevorzugt 30 bis 60 gew.-%iger wäßriger Lösungen eingesetzt.

Die Polymerisat-Lösungen oder Suspensionen und die wäßrigen Wasserstoffperoxid-Lösungen können auf einfache Weise miteinander vermischt und nach dem Vermischen zerstäubt werden.

Man kann auch die entsprechenden Lösungen der einzelnen Komponenten über separate Düsen zusammen zerstäuben und sprühtrocknen. Diese Verfahrensweise hat den Vorteil, daß ein vorgeschalteter Mischvorgang nicht erforderlich ist.

Die Mengenverhältnisse werden so gewählt, daß, bezogen auf den Feststoffgehalt an Polymerisat, 5 bis 40 Gew.-%, vorzugsweise 7 bis 20 Gew.-% Wasserstoffperoxid in den Lösungen vorhanden ist.

Die wäßrigen oder wäßrig-alkoholischen Lösungen oder Suspensionen von Polymerisaten und Wasserstoffperoxid werden dann zerstäubt, wobei die zu zerstäubenden Lösungen vorzugsweise Temperaturen von 10 bis 50°C aufweisen.

Die zu zerstäubenden Lösungen oder Suspensionen können auch Sprühhilfsmittel wie Polyvinylalkohole, Cellulosederivate, Stärkederivate, Ligninsulfonate, Polyacrylsäure und Polyacrylamide enthalten. Als Antiblockmittel können z.B. feingemahlene Aluminium-Silikate, Kieselgur, kolloides Silicagel, Diatomeenerde, Calciumcarbonat oder Tricalciumphosphat zugesetzt werden.

Die Zerstäubung erfolgt vorzugsweise als hydrodynamische Zerstäubung durch Flüssigkeitsdruck oder Luftdruck über Düsen wie beispielsweise Einstoff-, Mehrstoff- oder Scheiben-Düsen mit Hilfe herkömmlicher Zerstäubungsvorrichtungen.

Das Grundprinzip ist die Zerstäubung der Lösung in sehr kleine Tröpfchen. Diese Tröpfchen haben eine sehr große Oberfläche, was eine schnelle Verdampfung gestattet. Der erforderliche geringe Durchmesser der Tröpfchen wird durch die Geschwindigkeit des Zerstäuberrades erzielt. Der erreichbare Verdampfungsgrad genügt, um die Feuchtigkeit völlig aus den Tröpfchen zu entfernen. Durch die Verdampfungskalte und die Kürze der Schwebezeit wird eine Warmebeschädigung des Produktes vermieden.

Die Trocknung der Flüssigkeitströpfchen kann in einem Sprühturm herkömmlicher Bauart erfolgen, wobei ein inertes Gas wie Stickstoff, Argon oder Helium als Trocknungsgas verwendet wird, welches im Gleichstrom oder Gegenstrom mit den Flüssigkeitstropfen durch den Trocknungsturm geleitet werden kann. Vorzugsweise wird das Trocknungsgas im Gleichstrom eingesetzt, wobei die Turmeingangstemperatur des Gases bei 60 bis 160, vorzugsweise 90 bis 140°C liegt und die Turmausgangstemperatur bei 40 bis 100, vorzugsweise 60 bis 80°C. Die Verdampfung des Lösungsmittels kann sowohl bei Normaldruck als auch bei 0,6 bis 1,2 bar erfolgen.

Das entstehende Pulver kann in üblicher Weise über ein Zyklon von dem Gasstrom getrennt werden.

Der Restlösungsmittelgehalt des so entstehenden Pulvers beträgt im allgemeinen nicht über 7,5 Gew.-%. Die Teilchengrößen der entstehenden Pulverteilchen liegen im allgemeinen bei 10 bis 150 µm. Bei einer Sprühgranulation können Teilchengrößen bis 450 µm erreicht werden.

Der erfindungsgemaß hergestellte pulverförmige Wasserstoffperoxid-Polymer-Komplex enthält Wasserstoffperoxid in einem Anteil von 0,5 bis 30 Gew.-%, bevorzugt 5 bis 15 Gew.-%.

Das erfindungsgemäße Verfahren erlaubt auf einfache Weise die Herstellung von Wasserstoffperoxid/Polymer-Komplexen. Besonders vorteilhaft ist dabei, daß die dabei verwendeten Polymere in Form ihrer Lösungen, so wie sie bei der Polymerisation anfallen, eingesetzt werden können, ohne daß eine weitere Aufarbeitung beispielsweise zu Pulvern, erforderlich ist. Weiterhin ist es von großem Vorteil, daß Wasserstoffperoxid nicht in Form hochkonzentrierter oder wasserfreier Lösungen gehandhabt werden muß.

Es war außerdem überraschend, daß bei der Sprühtrocknung keine Zersetzungsprozesse auftreten.

Nach dem erfindungsgemäßen Verfahren hergestellte Wasserstoffperoxid-Komplexe können beispielsweise Verwendung finden in der Desinfektion oder Konservierung, insbesondere in Zahnpasten, bei der Akne-Therapie, als Wundauflagen, in der Kosmetik, z.B. in der Haarkosmetik (Haarfarbung, Haarbleiche) und in der Depilation, oder als feste Komponente für chemische Reaktionen wie Polymerisationen oder Oxidationen, weiterhin als Waschmittelzusatz oder als Hilfsmittel in der Textil- und Papierbleiche sowie als Bestandteil von Filtersystemen, z.B. für die Wasserbehandlung oder in der Medizin für die Blutbehandlung, in die die beschriebenen Komplexe mit vernetzten Polymeren eingearbeitet oder aufgebracht werden können. Da das Wasserstoffperoxid freigesetzt wird, können die Komplexe auch für Ätzverfahren verwendet werden.

### Beispiel 1

Eine Lösung aus
- 500 g: Polyvinylpyrrolidon K-Wert 30,
- 153 g: 50 gew.-%igem wäßrigem Wasserstoffperoxid und
- 1347 g: Wasser

wurde mit Hilfe einer Zweistoff-Düse bei einem Druck von 1,5 bar in einem Trockenturm (⌀ 900 mm; Hohe 1400 mm) versprüht. Als Trockengas wurde Stickstoff mit einer Turmeingangstemperatur von 130°C und einer Turmausgangstemperatur von 60°C eingesetzt. Die Sprühtrocknung erfolgte bei einem Druck von 1 bar. Das entstehende frei fließende Pulver, welches über ein Zyklon von dem Gasstrom abgetrennt wurde, wies einen Wasserstoffperoxid-Gehalt von 11,5 Gew.-% auf (bestimmt durch Titration mit Kaliumpermanganat). Der Restlösungsmittelgehalt des Pulvers betrug 4 Gew.-%.

### Beispiel 2

Eine Lösung aus
- 400 g: Polyvinylcaprolactam, K-Wert 30,
- 100 g: 50 gew.-%ige wäßriger Wasserstoffperoxid-Lösung und
- 1500 g: Wasser
wurde analog den unter Beispiel 1 genannten Verfahrensbedingungen sprühgetrocknet.

Das so erhaltene frei fließende Pulver wies einen Wasserstoffperoxidgehalt von 10,1 Gew.-% auf.

Zur orientierenden Untersuchung der desinfizierenden Wirkung wurde die minimale Hemmkonzentration (MHK) von verschiedenen Proben untersucht. Dieser Test ergibt die bakteriostatische und fungistatische Wirksamkeit der Inaktivierungssubstanz an.

Geprüft wird nach den Richtlinien für die "Prüfung und Bewertung chemischer Desinfektionsverfahren (Stand: 01.01.1981)" der Deutschen Gesellschaft für Hygiene und Mikrobiologie (DGHM). Die Auswertung erfolgte nach 72stündiger Bebrütung bei 36°C. Die Verdünnung erfolgte mit Wasser standardisierter Härte ohne weitere Hilfsmittel (Tenside). Die Einstellung des pH-Wertes auf 7,2 wurde mit 0.1 mol/l NaOH bzw. mit 0.1 mol/l HCl durchgeführt. Die Abstufung der Prüfkonzentrationen erfolgte gemäß den nachfolgend aufgeführten Verdünnungsschritten. Alle Angaben in Vol-%:

100, 75, 50, 25, 20, 15, 10, 7,5, 5,0, 4,0, 3,0, 2,5, 2,0, 1,5, 1,00, 0,75, 0,50, 0,250, 0,10, 0,050, 0,025, 0,01250, 0,00625 (usw. in geometrischer Reihe, d.h. jeweils im Faktor 0,5 reduzierter Konzentration).

MHK (Minimale Hemmkonzentration nach DGHM, Stand 12.07.1991):

| | Wasserstoffperoxid-Komplexe | |
|---|---|---|
| | Komplex gemäß Beispiel 1 | Komplex gemäß Beispiel 2 |
| Keimart: | MHK-Werte [%] | |
| STA | 1,5 | 1,5 |
| EC | 0,75 | 0,75 |
| PRM | 5,0 | 5,0 |
| PSA | 2,5 | 5,0 |
| CA | 0,75 | 0,75 |

Bei den Keimen handelt es sich um Staphylococcus aureus (STA). Escherichia coli (EC), Proteus mirabilis (PRM), Pseudomonas aeruginosa (PSA) und Candida albicans (CA).

Das Screening wurde nicht bis zur wiederholten Auffindung eines Wertes durchgeführt, sondern lediglich zweimal. Die MHK-Werte sind für die einzelnen Komplexe aus der Liste zu entnehmen.

## Patentansprüche

1. Verfahren zur Herstellung von pulverförmigen Wasserstoffperoxid-Polymer-Komplexen, dadurch gekennzeichnet, daß man eine wäßrige oder wäßrig-alkoholische Lösung oder Suspension, enthaltend Polymerisate auf Basis von heterocyclischen N-Vinyl-Verbindungen und Wasserstoffperoxid, oder entsprechende Lösungen der einzelnen Komponenten zerstäubt und der Sprühtrocknung in einem Inertgasstrom unterwirft.

2. Verfahren nach Anspruch 1, dadurch gekennzeichnet, daß die Zerstäubung über eine Düse erfolgt.

3. Verfahren nach Anspruch 1 oder 2, dadurch gekennzeichnet, daß das Polymerisat ausgewählt ist aus der Gruppe, bestehend aus Polyvinylcaprolactam, Polyvinylpyrrolidon, Polyvinylimidazol oder Copolymerisaten der genannten Polymere.

## Claims

1. A process for preparing hydrogen peroxide/polymer complexes in powder form, which comprises atomizing, and subjecting to spray-drying in a stream of inert gas, an aqueous or aqueous/ alcoholic solution or suspension containing polymers based on heterocyclic N-vinyl compounds and hydrogen peroxide, or corresponding solutions of the individual components.

2. A process as claimed in claim 1, wherein the atomization takes place through a nozzle.

3. A process as claimed in claim 1 or 2, wherein the polymer is selected from the group consisting of polyvinylcaprolactam, polyvinylpyrrolidone, polyvinylimidazole or copolymers of said polymers.

## Revendications

1. Procédé de préparation de complexes de polymères et de peroxyde d'hydrogène pulvérulents, caractérisé en ce que l'on pulvérise une suspension ou une solution aqueuse, ou aqueuse-alcoolique, qui contient des polymères à base de composés N-vinyliques hétérocycliques et de peroxyde d'hydrogène, ou des solutions correspondantes des composants individuels et on les soumet à un séchage par pulvérisation dans un courant d'un gaz inerte.

2. Procédé suivant la revendication 1, caractérisé en ce que la pulvérisation s'effectue à l'aide d'un ajutage.

3. Procédé suivant la revendication 1 ou 2, caractérisé en ce que l'on choisit le polymère dans le groupe constitué du polyvinylcaprolactame, de la polyvinylpyrrolidone, du polyvinylimidazole ou de copolymères des polymères précités.
